# EUROPÄISCHE PATENTSCHRIFT

(11) **EP 0 760 281 B1**
(45) Veröffentlichungstag und Bekanntmachung des Hinweises auf die Patenterteilung: **04.12.2002**
(21) Anmeldenummer: 96113521.7
(22) Anmeldetag: 23.08.1996
(51) Int. Cl.: B32B 5/18, B32B 3/24, B32B 3/30, D06N 7/00

(54) **Struktur-Wandbelag und Verfahren zum Herstellen desselben**
Structured wall covering and method for producing the same
Revêtement de mur structuré et son procédé de fabrication

(30) Priorität: 24.08.1995 DE 19531142
(43) Veröffentlichungstag der Anmeldung: 05.03.1997
(73) Patentinhaber: Polymer-Tec GmbH, 55566 Bad Sobernheim (DE)
(72) Erfinder: Hauf, Günter, Dr., 55543 Bad Kreuznach (DE)
(74) Vertreter: Müller-Gerbes, Margot, Dipl.-Ing.

(56) Entgegenhaltungen:
- EP-A- 0 026 662
- DE-A- 4 120 306
- US-A- 4 525 406

## Beschreibung

Die Erfindung betrifft einen Struktur-Wandbelag aus einem mittels Prägen mit einer Oberflächenstruktur versehenen Verbund eines bahnenförmigen Schaumstoffes von überwiegend geschlossenzelliger Schaumstruktur auf Basis von Polyolefinen, wie Polyethylen oder Polypropylen, eines Klebefilmes auf Basis eines thermoplastischen Kunststoffes und einer Trägerbahn auf Basis einer cellulosehaltigen Bahn, wie einer Papierbahn oder eines Cellulosefaservlieses, oder eines Synthesefaservlieses.

Des weiteren befaßt sich die Erfindung mit einem Verfahren zum Herstellen eines Struktur-Wandbelages der vorgenannten Art, bei dem auf die Trägerbahn als Klebefilm ein frisch extrudierter thermoplastischer Kunststoff aufgebracht und hiermit die vorgefertigte Schaumstoffbahn von geschlossenzelliger Schaumstruktur beim Durchführen durch einen Walzenspalt unter Druck verbunden wird und nachfolgend beim Durchlaufen eines Prägespaltes die Oberfläche der Schaumstoffbahn des Verbundes geprägt wird.

Seit langem bekannt sind Struktur-Wandbeläge in Gestalt von Strukturschaumstoff-Tapeten auf Basis von PVC-Schaum. Diese haben jedoch den Nachteil, daß sie im Brandfall aggressive Gase entwickeln, die infolge Angriff auf die Gebäudearmierung zu einer Schädigung des Mauerwerkes führen und zur Personengefährdung führen, was vielfach schwerwiegender ist als der durch das Feuer allein verursachte Schaden.

Derartige Struktur-Wandbeläge werden sowohl zur Erhöhung der Wärmedämmung in Wohn- und Geschäftsräumen als auch zur optischen Verschönerung dieser Räume, also zur Verbesserung der Wohnqualität eingesetzt. Insbesondere ermöglichen eine Bedruckung und Strukturierung der Schaumoberfläche die Herstellung unterschiedlicher Dessins. Ein wesentliches Erfordernis dieser Struktur-Wandbeläge ist eine einwandfreie und leichte Verarbeitbarkeit.

Ein gattungsgemäßer Struktur-Wandbelag in Gestalt einer Strukturschaumstoff-Tapete sowie ein Verfahren zum Herstellen derselben ist beispielsweise aus der DE 41 20 306 A1 bekannt geworden.

Aus dem DE GM 94 02 973 ist eine Tapete aus einem geschäumten Kunststoff und einer Papierbahn bekannt, bei der eine aus geschäumtem Kunststoff bestehende Folie die obere, die Tapetenmusterung aufnehmende Schicht ist, und die Papierbahn die mit der Wand zu verklebende untere Schicht bildet, wobei die beiden Schichten miteinander haftfest durch Kaschierung verbunden sind, gegebenenfalls unter Einsatz eines Klebers.

Aus den vorgenannten Druckschriften sind Strukturschaumstoff-Tapeten auf Basis von Polystyrol- bzw. Polyethylenschaumstoff bekannt. Sie verhalten sich im Brandfall wie die üblicherweise eingesetzten Papiertapeten.

Bei der Herstellung von Strukturschaumstoff-Tapeten auf Basis von Polystyrol bzw. Polyethylenschaum gemäß den vorgenannten Druckschriften werden vorgefertigte Schaumstoffbahnen eingesetzt, die dann mit Papierbahnen unter Zuhilfenahme einer Klebeschicht verbunden werden. Solche vorgefertigten Schaumstoffbahnen weisen jedoch fertigungsbedingt erhebliche innere Spannungen auf, die sich bei der Herstellung des Verbundes der Strukturschaumstoff-Tapeten mit einer Papierbahn noch erhöhen und damit zur Ausbildung einer starken Rollneigung führen, wodurch sie ein ungünstiges Endverarbeitungsverhalten aufweisen, das bereits bei der Herstellung impliziert wird.

Der Erfindung liegt die Aufgabe zugrunde, einen Struktur-Wandbelag der gattungsgemäßen Art sowie ein Herstellungsverfahren hierfür zu schaffen, das unter Einsatz vorgefertigter halogenfreier Schaumstoffbahnen zu einem Endprodukt führt, das gut bedruckbar und verarbeitbar ist, d.h. beim Verarbeiten möglichst plan aufliegt und möglichst keine Roll- bzw. Wölbneigung zeigt. Es ist daher Aufgabe der Erfindung, einen gut bedruckbaren Struktur-Wandbelag unter Einsatz vorgefertigter Schaumstoffbahnen zu schaffen, der geringe innere Spannung aufweist bzw. dessen innere Spannungen beim Verarbeiten aufgehoben sind.

Erfindungsgemäß wird diese Aufgabe durch Weiterbildung eines gattungsgemäßen Struktur-Wandbelags zur Verbesserung der Verarbeitbarkeit dadurch gelöst, daß die geprägte Schaumstoffbahn des Verbundes eine unterschiedliche Dicke von 0,02 bis 3 mm aufweist und im Bereich der Oberfläche der Schaumstoffbahn eine verdichtete Schwarte, unter der die Zellen stark vergrößert sind, hieran anschließend nach der Mitte zu eine aufgelockerte gegenüber der nicht geprägten Schaumstoffbahn vergröberte Zellstruktur und in dem an den thermoplastischen Klebefilm angrenzenden Bereich im wesentlichen die gleichmäßig feinzellige Zellstruktur der noch nicht geprägten Schaumstoffbahn aufweist, und der Struktur-Wandbelag Kanäle aufweist, die durch die Trägerbahn, den Klebefilm und die geprägte Schaumstoffbahn des Verbundes hindurchführen und durch das Prägen ein alternierender Querschnittswechsel der Schaumstoffbahn bei annähernder Planlage der Trägerbahn vorhanden ist, wobei die vorgenannten Maßnahmen zu einer guten Planlage des Struktur-Wandbelags führen.

Vorteilhafte Ausgestaltungen des erfindungsgemäßen Struktur-Wandbelages sind den kennzeichnenden Merkmalen der Unteransprüche entnehmbar.

In Weiterbildung der Erfindung weist der Verbund bis zu 50 Kanäle pro cm² Fläche auf. Die Kanäle weisen bevorzugt einen Durchmesser von 0,01 bis 0,5 mm auf, sie können auch leicht konisch sich zur Schaumstoffseite hin verengend verlaufen. Je feiner die Kanäle, desto mehr Kanäle können auf einer vorgegebenen Fläche ausgebildet sein. Durch diese Ausbildung von Kanälen, die durch den Verbund hindurchführen, wird die Feuchtigkeitsdurchlässigkeit des erfindungsgemäßen Struktur-Wandbelages erleichtert und wesentlich verbessert.

Die Kanäle beschleunigen nach dem Verkleben des Struktur-Wandbelags die Abgabe des in der Trägerbahn und der Schaumstoffbahn absorbierten Wassers an die Umgebung. Darüber hinaus bewirken die Kanäle durch die gehäufte Unterbrechung des Verbundgefüges eine hohe Flexibilisierung des erfindungsgemäßen Struktur-Wandbelages, die zum Abbau der inneren Spannungen beiträgt und eine leichte Verarbeitbarkeit sicherstellt.

Erfindungsgemäß werden für die Schaumstoffschicht und auch für die Klebeschicht halogenfreie thermoplastische Kunststoffe eingesetzt, wobei insbesondere Polyolefine, wie Polyethylen oder Polypropylen oder auch Abmischungen dieser thermoplastischen Kunststoffe, gegebenenfalls mit weiteren verträglichen Materialien eingesetzt werden können.

Um einen möglichst homogenen Verbund des Struktur-Wandbelags mit rückseitiger Trägerbahn zu erhalten, wird als Klebefilm bevorzugt ein solcher Film ausgewählt, der auf Basis des gleichen thermoplastischen Kunststoffes, aus dem auch die Schaumstoffbahn besteht, hergestellt ist oder aber aus einem thermoplastischen Schmelzkleber besteht. Der Klebefilm wird in jedem Fall bevorzugt unmittelbar extrudiert und noch plastisch auf die Trägerbahn aufgebracht, um dann ohne weiteres mit der hierauf aufgebrachten Schaumstoffbahn und der Trägerbahn zu einem haftfesten Verbund sich zu verbinden.

Bei dem erfindungsgemäßen Struktur-Wandbelag kann die Oberflächenstrukturierung mittels Prägen so ausgeführt werden, daß nur die Oberfläche der Schaumstoffbahn oder beide Oberflächen, nämlich die Oberseite und die Rückseite des Struktur-Wandbelags strukturiert werden und Bereichen tiefgeprägter Struktur mit Einbuchtungen auf der Oberfläche der Schaumstoffbahn leicht konkave, d.h. eingezogene Bereiche auf der anderen Oberfläche der Trägerbahn gegenüberliegend ausgebildet sind, so daß in diesen Bereichen der Struktur-Wandbelag eine maximale Verminderung seiner Dicke enthält. Infolge dieser tiefgeprägten Struktur des Struktur-Wandbelags mit alternierenden Querschnittswechseln weist dieser eine erhöhte Flexibilität auf, wodurch vorhandene innere Spannungen des Struktur-Wandbelags weiter abgebaut werden.

Weiterhin ist es möglich, daß die Schaumstoffbahn des erfindungsgemäßen Struktur-Wandbelages auf ihrer dem Klebefilm abgewandten Seite eine fest aufgebrachte Deckfolie einer Dicke von 10 bis 100 µm aus artgleichem Kunststoff wie die Schaumstoffbahn aufweist. Diese Deckfolie kann beispielsweise als Schutz für die strukturierte und gegebenenfalls mit einer Bedruckung versehen Oberfläche der Schaumstoffbahn des Verbundes vorgesehen sein und ist in diesem Fall vorzugsweise aus einem transparenten Kunststoff hergestellt. Es ist auch möglich, die Deckfolie selbst in gewünschter Weise zu bedrucken und/oder zu prägen, um vorteilhafte optische Effekte zu erzielen.

Zur Erzielung einer leichten und dauerhaften Bedruckbarkeit der Schaumstoffbahn des Verbundes schlägt die Erfindung überdies vor, auf die Oberfläche der Schaumstoffbahn des Verbundes eine Beschichtung auf Basis eines feuchtigkeitsvernetzenden Polyurethan-Systems mit einer Dicke kleiner als 50 µm aufzubringen. Diese Beschichtung mittels des Polyurethan-Systems dient sodann als Haftvermittler und erlaubt eine leichte Bedruckung der Oberfläche der Schaumstoffbahn zum Beispiel mittels einer wäßrigen Druckfarbendispersion.

Auch ist es möglich, die Schaumstoffbahn des Verbundes einzufärben und auf diese Weise eine gewünschte Farbgebung des erfindungsgemäßen Struktur-Wandbelages zu erzielen.

Der erfindungsgemäße Struktur-Wandbelag kann sowohl mit einer wasseraufnehmenden cellulosehaltigen Trägerbahn als auch mit einer Trägerbahn auf Basis eines Synthesefaservlieses, die nahezu kein Wasser aufnimmt, ausgebildet werden.

Vorteilhaft beträgt die Wasseraufnahme des den erfindungsgemäßen Struktur-Wandbelag bildenden Verbundes mit einer cellulosehaltigen Trägerbahn mindestens 0,15 ml/g in 10 Minuten.

Als Trägerbahn mit hoher Saugfähigkeit wird insbesondere eine Papierbahn mit einem Flächengewicht von 20 bis 150 g/m² eingesetzt, die mindestens 30 Volumen-% offene Poren in bezug auf das Gesamtvolumen der Papierbahn aufweist.

Derartige wasseraufnehmende aus einer cellulosehaltigen Bahn gebildete Trägerbahnen weisen vorteilhaft an der Wasseraufnahme einen Anteil von 99,5 bis 95 % und die geprägte Schaumstoffbahn des Verbundes einen Anteil von 0,5 bis 5 % aufweist.

Diese wasseraufnehmenden cellulosehaltigen Trägerbahnen werden üblicherweise vor dem Anbringen an einer trockenen Wand mit Kleister bestrichen und dann auf die trockene Wand gedrückt.

Nach einem weiteren Vorschlag können für den erfindungsgemäßen Struktur-Wandbelag auch Trägerbahnen aus einem Synthesefaservlies auf Basis von thermoplastischen Kunststoffen eingesetzt werden, die nur eine geringe bis nahezu keine Wasseraufnahme aufweisen. Als thermoplastische Kunststoffe für diese Synthesefaservliese werden im Rahmen der Erfindung insbesondere thermoplastische Polyester wie auch Polyolefine; bei diesen insbesondere auf Basis von Polypropylen, vorgesehen. Struktur-Wandbeläge mit einer Trägerbahn aus einem Synthesefaservlies eignen sich durch ihre geringe bis nahezu keine Wasseraufnahme insbesondere für die Anwendung auf großflächigen Wänden von Gebäuden. Hierbei wird aus Gründen der wirtschaftlichen Verarbeitung der Kleister/Klebstoff auf die Wände aufgebracht und die Struktur-Wandbeläge in trockenem Zustand in den auf der Wand zuvor aufgebrachten Kleister/Klebstoff eingedrückt werden. Dabei kommt es seitens der trockenen und nicht zur Wasseraufnahme neigenden Trägerbahn des Struktur-Wandbelages zu keinerlei Aufquellen oder ähnlichen Veränderungen, so daß die Randstöße des in Bahnen aufgebrachten Struktur-Wandbelages sich nicht mehr verändern, wie es etwa bei einer cellulosehaltigen Trägerbahn der Fall wäre.

Bevorzugt werden Synthesefaservliese mit einem Flächengewicht von 50 bis 200 g/m² eingesetzt, die bei ausreichender Stabilität leicht verarbeitbar sind.

In einer weiteren vorteilhaften Weiterbildung der Erfindung ist es auch möglich, hydrophil ausgerüstete Synthesefaservliese als Trägerbahn einzusetzen. Auf diese Weise ist es möglich, die Hypdophobie von gewissen Kunststoffen, wie Polyolefinen zu überwinden bzw. die Wasseraufnahmefähigkeit der Synthesefaservliese zu steigern und dem Synthesefaservlies eine verbesserte Wasseraufnahme zu verleihen. Die erfindungsgemäß mit verbesserter Wasseraufnahme hydrophil ausgerüsteten Synthesefaservliese, neben Polyestervliesen bevorzugt auch solche auf Basis von Polyolefinen, weisen ein verbessertes Anhaften auf einem wasserhaltigen Klebemittel oder Kleister, der auf einer Wand aufgebracht ist, auf. Damit lassen sich hydrophil ausgerüstete, Synthesefaservliese enthaltende Struktur-Wandbeläge leichter verarbeiten.

Wird als Polyolefin beispielsweise Polypropylen für das Synthesefaservlies der Trägerbahn eingesetzt, ist es darüber hinaus möglich, einen sortenreinen und damit leicht recyclebaren Verbund eines Wandbelages herzustellen, indem auch die Klebeschicht und die Schaumstoffbahn aus diesem Polyolefin hergestellt sind.

Die hydrophile Ausrüstung von Synthesefaservliesen aus thermoplastischem Kunststoff, wie einem Polyolefin, kann durch äußeres Aufbringen eines Benetzungsmittels, vorzugsweise anionische und/oder nichtionische oberflächenaktive Substanzen auf das Vlies oder durch Einarbeiten derartiger Benetzungsmittel in den thermoplastischen Kunststoff vor seiner Verarbeitung zu einem Synthesefaservlies erfolgen. Derartige mit oberflächenaktiven Substanzen versehene Kunststoffe, die auch zum Herstellen von Synthesefaservliesen geeignet sind, sind beispielsweise in der US-PS 4 578 414 beschrieben.

Geeignete Benetzungsmittel, die durch Aufsprühen oder mittels Tauchbad auf das Synthesefaservlies aufgebracht werden können, sind beispielsweise nichtionische Tenside auf Basis von Fettalkoholethoxylaten oder anionische Tenside auf Basis von Polyglykolestern und/oder Fettalkoholphosphaten. Die Tenside werden in Mengen von etwa 0,3 bis 3 Gew.-% bezogen auf das Gewicht des Synthesefaservlieses eingesetzt. Es ist auch möglich, Gemische von Tensiden einzusetzen, ebenso ist es auch möglich, kationische Tenside einzusetzen.

Die Erfindung betrifft des weiteren ein Verfahren zum Herstellen eines Struktur-Wandbelags aus einem mittels Prägen mit einer Oberflächenstruktur versehenen Verbundes eines bahnenförmigen Schaumstoffes von geschlossenzelliger Schaumstruktur auf Basis von Polyolefinen, wie Polyethylen oder Polypropylen, eines Klebfilmes auf Basis eines thermoplastischen Kunststoffes und einer Trägerbahn auf Basis einer cellulosehaltigen Bahn, wie einer Papierbahn oder eines Cellulosefaservlieses, oder eines Synthesefaservlieses nach einem der Ansprüche 1 bis 15, bei dem auf die Trägerbahn als Klebefilm ein frisch extrudierter thermoplastischer Kunststoff aufgebracht und hiermit die vorgefertigte Schaumstoffbahn von geschlossenzelliger Schaumstruktur beim Durchführen durch einen Walzenspalt unter Druck verbunden wird und nachfolgend beim Durchlaufen eines Prägespaltes die Oberfläche der Schaumstoffbahn des Verbundes geprägt wird. Das Verfahren zur Herstellung eines Struktur-Wandbelags mit verbesserter Verarbeitbarkeit ist dadurch gekennzeichnet, daß unmittelbar vor dem Verbinden mit der Trägerbahn die Schaumstoffbahn bei annähernd Raumtemperatur um maximal 1 % gelängt wird und der extrudierte thermoplastische Klebefilm zunächst auf die Trägerbahn aufgebracht und unmittelbar danach dieser Vorverbund von Trägerbahn und Klebefilm dem Walzenspalt zugeführt und hier mit der gelängten Schaumstoffbahn verbunden wird und bei dem nachfolgenden Prägen die Oberfläche des Verbundes strukturiert wird, wobei die Dicke der Schaumstoffbahn um 5 bis 95 % vermindert wird und der Verbund vor oder nach dem Durchlaufen des Prägespaltes maschinell mit durch den Verbund hindurchführenden Kanälen versehen wird.

Das erfindungsgemäße Verfahren zur Herstellung eines Struktur-Wandbelags ist bevorzugt so ausgeführt, daß der Verbund vor oder nach dem Prägen genadelt wird. Diese Nadelung kann beispielsweise dadurch erfolgen, daß der Verbund durch einen Spalt zwischen einer Nadelwalze und einer Gegenwalze geführt wird. Vorteilhaft wird dabei der Verbund entlang seiner Trägerbahn an der Nadelwalze vorbeigeführt, so daß die vollständige Ausbildung der Kanäle in dieser Trägerbahn stets zuverlässig gewährleistet ist.

Die Nadelung des Struktur-Wandbelags führt zur Ausbildung von Kanälen in dem Struktur-Wandbelag, durch die die Abgabe des insbesondere und überwiegend von der Trägerbahn absorbierten Wassers an die Umgebung beschleunigt wird.

Das erfindungsgemäße Verfahren ermöglicht die Herstellung eines Struktur-Wandbelages mit verbesserter Verarbeitbarkeit und verminderten inneren Spannungen. Durch das Ausbilden von Bereichen tiefgeprägter Struktur des Verbundes wird eine erhöhte Flexibilität erreicht und innere Spannungen werden abgebaut. Gleichzeitig wird die Schaumstruktur der Schaumstoffbahn umgebaut und im Bereich der Oberfläche eine verdichtete Schwarte mit vergrößerten Zellen und ggf. aufgerissenen Zellwänden ausgebildet, nach der Mitte zu eine aufgelockerte Zellstruktur erreicht und in dem Bereich zu dem thermoplastischen Klebfilm hin eine gleichmäßig feine Zellstruktur erhalten. Auch hierdurch werden in dem Struktur-Wandbelag vorhandene Rollspannungen abgebaut. Die in dem Verbund ausgebildeten Kanäle bewirken ebenfalls einen Abbau innerer Spannungen durch eine gesteigerte Flexibilisierung des Verbundgefüges. Vollends werden die zu Roll- bzw. Wölbneigung führenden inneren Spannungen durch Wasseraufnahme insbesondere der cellulosehaltigen Trägerbahn des Struktur-Wandbelags ausgeschaltet, was zu einem völligen. Planliegen führt.

Erfindungsgemäß wird die Roll- und Wölbneigung des nach der Herstellung auf Rollen verpackten, eine cellulosehaltige Trägerbahn aufweisenden Struktur-Wandbelages beim Abrollen von der Rolle für das Anbringen an einer Wand noch weiter dadurch eliminiert, daß der geprägte, genadelte und gegebenenfalls bedruckte, die cellulosehaltige Trägerbahn enthaltende Verbund befeuchtet wird, so daß die durch die vorangegangenen Verfahrensschritte verlorengegangene Feuchte der Trägerbahn mindestens wieder ausgeglichen wird und die Restfeuchte der cellulosehaltigen Trägerbahn durch das Befeuchten auf 5 bis 15 % angehoben wird. Bei dieser Befeuchtung des Verbundes nimmt im Wesentlichen nur die cellulosehaltige Trägerbahn Wasser auf, wobei zumindest der natürliche Restfeuchtegehalt von Papier wieder erreicht wird. Bevorzugt wird jedoch ein höherer Restfeuchtegehalt der Trägerbahn bis höchstens 15% angestrebt. Dieses Wiederbefeuchten des Verbundes bzw. der im Verbund enthaltenen cellulosehaltigen Trägerbahn kann auch wegen der mit einer schnellen und hohen Wasseraufnahmefähigkeit ausgestatteten und verwendeten Trägerbahn rationell durchgeführt werden.

Nach seiner Fertigstellung wird der Struktur-Wandbelag abschnittsweise auf Rollen aufgewickelt und luftdicht verpackt, z.B. in Folie verschweißt. Im Falle einer cellulosehaltigen Trägerbahn bleibt so die in den Verbund bzw. die Trägerbahn eingebrachte erhöhte Restfeuchte während des Transports und der Lagerung der Rollen erhalten und somit auch nach längerer Lagerung die vorteilhaften Eigenschaften des erfindungsgemäßen Struktur-Wandbelages bestehen bleiben.

Um eine Schutzschicht für die Schaumstoffbahn und/oder eine dekorativ, z.B. farblich gestaltete Oberfläche für den erfindungsgemäßen Struktur-Wandbelag zu erhalten, wird vorgeschlagen, daß auf die Schaumstoffbahn vor dem Einlaufen in den Walzenspalt auf ihrer dem Klebefilm abgewandten Oberfläche eine Deckfolie aus artgleichem Kunststoff aufgebracht wird, die eine Dicke von 10 bis 100 µm aufweist. Die Deckfolie kann vorteilhaft im Coextrusionsverfahren auf die Schaumstoffbahn aufgebracht werden.

Um eine leichte Bedruckbarkeit der Schaumstoffbahn des Struktur-Wandbelages zu erzielen, kann auf die dem Klebefilm abgewandte Oberfläche der Schaumstoffbahn ein feuchtigkeitsvernetzendes Polyurethan-System als Haftvermittler mittels eines Dünnstrichs aufgebracht werden und die mit dem Haftvermittler versehene Oberfläche mittels einer wäßrigen Druckfarbendispersion bedruckt werden.

Dieses Aufbringen des Haftvermittlers und Bedrucken der Schaumstoffbahn kann sowohl vor der Herstellung des Verbundes als auch nach dessen Herstellung und vor bzw. nach dem Herstellen der Kanäle nach Belieben des Fachmannes erfolgen.

Die Erfindung wird nachfolgend anhand der Zeichnung an einem Ausführungsbeispiel erläutert. Es zeigen
- Fig. 1: eine schematische Darstellung der Herstellung des Struktur-Wandbelags
- Fig. 2: den vergrößerten Querschnitt der Schaumstoffbahn gemäß Detail A von Fig. 1
- Fig. 3: den vergrößerten Querschnitt der Papierbahn gemäß Detail B nach Fig. 1
- Fig. 4: den vergrößerten Querschnitt des Struktur-Wandbelags gemäß Detail D nach Fig. 1.

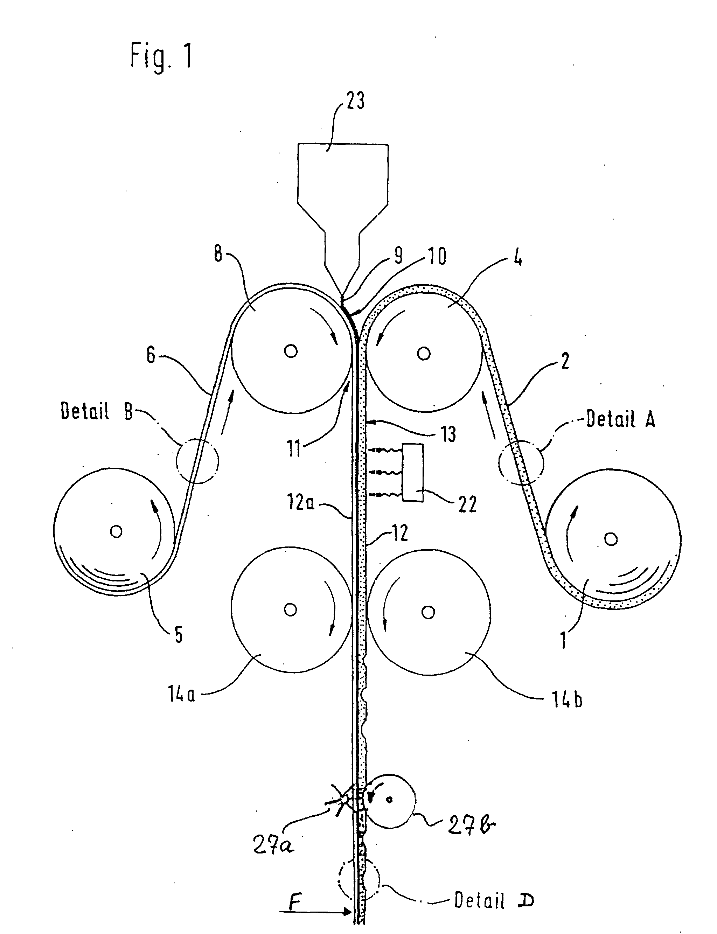

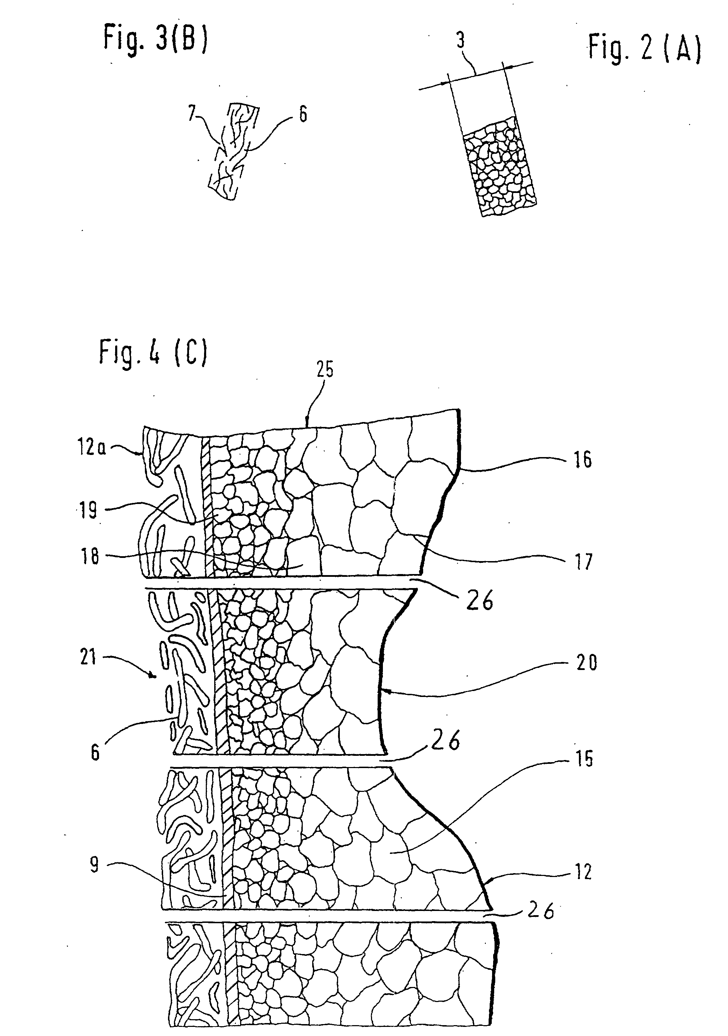

In der Fig. 1 ist schematisch das Herstellungsverfahren dargestellt. Von einer angetriebenen Vorratsrolle 1 wird eine im wesentlichen geschlossenzellige Schaumstoffbahn 2 aus beispielsweise Polyethylen mit einer Dicke 3, siehe Fig. 2, von beispielsweise 1,2 mm, die nach einem Strangpreßverfahren hergestellt wurde, der angetriebenen gekühlten Metallwalze 4 einer Extrusionsbeschichtungsanlage zugeführt und dabei durch Aufbringen einer Spannung in der Schaumstoffbahn mechanisch um 0,15 % gelängt.

Der Extrusionsbeschichtungsanlage wird im dargestellten Ausführungsbeispiel des weiteren von einer Vorratsrolle 5 eine schwachgeleimte Papierbahn als Trägerbahn 6 mit einem Flächengewicht von 60 g/m², die 40 Volumen-% offene Poren 7, siehe Fig. 3, in bezug auf das Gesamtvolumen der Papierbahn aufweist, zugeführt. Die Trägerbahn 6 wird über die gekühlte Gummiwalze 8, die zusammen mit der angetriebenen gekühlten Metallwalze 4 den Walzenspalt 11 bildet, dem Walzenspalt 11 zugeführt. Unmittelbar vor Erreichen des Walzenspaltes 11 wird auf die Trägerbahn 6, noch aufliegend auf der Gummiwalze 8, eine Klebeschicht 9 aus einem Polyethylenfilm, extrudiert aus einem Extruder 23 und austretend aus einer beheizten Breitschlitzdüse 23 unmittelbar direkt aufgetragen. Der Polyethylenfilm als Klebeschicht 9 hat beispielsweise ein Flächengewicht von 30 g/m². Die noch heiße plastizifierte Klebeschicht 9 aus einem Polyethylenfilm klebt unmittelbar an der Trägerbahn 6. Der so gebildete Papierbahn-Polyethylenfilm-Verbund 10 trifft unmittelbar in dem nachfolgend angeordneten Walzenspalt 11 mit der mechanisch gelängten Schaumstoffbahn 2 zusammen und verbindet sich unter dem Druck beim Durchlaufen des Walzenspaltes mit ihr zu einem Verbund 13. Fast gleichzeitig wird der Verbund 13 durch die gekühlte Metallwalze 4 abgekühlt, so daß ein Ankleben der Schaumstoff bahn 2 an der Metallwalze 4 vermieden wird.

Der den Walzenspalt 11 zwischen Gummiwalze 8 und Metallwalze 4 verlassende Verbund 13 aus Papierbahn als Trägerbahn, Polyethylenfilm als Klebefilm und Schaumstoffbahn wird dann einer Prägestation, nämlich dem Prägewalzenpaar 14a, 14b zugeführt. Vor dem Einlaufen in den von dem Prägewalzenpaar gebildeten Walzenspalt wird die Oberfläche 12 der Schaumstoffbahn 2 des Verbundes 13 beispielsweise mittels IR-Strahler 22 in den thermoplastischen Zustandsbereich erwärmt, so daß beim nachfolgenden Durchlaufen der Prägewalzen, von denen die mit der Oberfläche 12a der Trägerbahn 6 in Kontakt kommende Prägewalze 14a gekühlt ist, beispielsweise auf 25 °C, die gewünschte Oberflächenstrukturierung der Schaumstoffbahn des Verbundes 13 erfolgt und eine strukturierte Schaumstoffbahn 15 nunmehr vorliegt. Bei der Prägung der Schaumstoffbahn des Verbundes 13 wird gleichzeitig auch auf der Oberfläche 12a des Verbundes 13 eine geringe Prägung durch leichte Einbuchtungen 21 im jeweils direkt gegenüberliegenden Bereich der Einbuchtungen 20 auf der Oberfläche 12 des Verbundes 13 erzielt, siehe Fig. 4 in der Vergrößerung.

Bei der Prägung wird die Dicke der Schaumstoffbahn 15, siehe Fig. 4, durch die eingeprägte Struktur um 5 bis 95 % vermindert, die bahnenförmige Schaumstoffschicht 15 des Struktur-Wandbelages 25 hat dann noch eine Dicke im Bereich zwischen beispielsweise 0,02 bis 1,5 mm. Zugleich verändert sich die Zellstruktur der Schaumstoffbahn 15, wobei die ursprünglich gleichmäßig feine Zellstruktur der Zellen 19 der noch nicht geprägten und verbundenen Schaumstoffbahn 2, siehe Fig. 2, durch Kollabieren einzelner Schaumzellen und Verdichten eine Schwarte 16 bilden und die verbleibenden gröberen Zellen verstärkte Zellwände besitzen, nach der Mitte hin eine aufgelockerte Zellstruktur mit gröberen Zellen 18 auftritt und lediglich im Bereich zu dem thermoplastischen Klebefilm 9 die ursprüngliche feine Zellstruktur mit Zellen 19 bevorzugt im Bereich der tiefgeprägten Oberfläche 12 der Schaumstoffbahn 15 erhalten bleibt.

Im Bereich der verdichteten Schwarte 16 und zur Oberfläche 12 der Schaumstoffschicht 15 hin entstehen vergrößerte Zellen 17. Von diesem Strukturumbau infolge des Prägens des Verbundes 13 ist auch die Trägerbahn 6 betroffen. In den Bereichen mit tiefgeprägter Struktur, Einbuchtungen 20 auf der Oberfläche 12 der Schaumstoffbahn 15, ist auf der Gegenseite, d.h. Oberfläche 12a der Trägerbahn 6 diese leicht konkav Einbuchtung 21 - nach innen eingezogen. Diese durch Komprimierung der Schaumstoffbahn 15 im Bereich der einander gegenüberliegenden Einbuchtungen 20, 21 bewirkte deutlich verminderte Dicke des Struktur-Wandbelags 25, hat zur Folge, daß über den gesamten Struktur-Wandbelag alternierende Querschnittswechsel erfolgen. Hierdurch erhält der Struktur-Wandbelag eine erhöhte Flexibilität, wodurch sich entstandene innere Spannungen in der Schaumstoffbahn 15 und Trägerbahn 6 in verstärktem Umfange ausgleichen können.

Der Struktur-Wandbelag 25 ist überdies mit den Verbund 13 durchdringenden Kanälen 26 ausgebildet.

Zur Ausbildung dieser Kanäle 26 in dem Verbund 13 des Struktur-Wandbelages 25 wird dieser genadelt. In Fig. 1 wird die Nadelung des Struktur-Wandbelages 25 beispielsweise von der Trägerbahnseite her mittels einer Stachelwalze 27a und einer Gegenwalze 27b ausgeführt. Die damit hergestellten Kanäle 26 führen durch die Trägerbahn 6 und den Klebefilm 9 und die Schaumstoffbahn 15 hindurch. Die Kanäle 26 weisen einen Durchmesser von 0,01 bis 0,5 mm auf.

Nach dem vorangehend beschriebenen Verfahren kann auch ein Struktur-Wandbelag hergestellt werden, bei dem als Trägerbahn ein Synthesefaservlies, beispielsweise auf Basis Polyester oder Polypropylen, gegebenenfalls hydrophil mittels eines im Tauchbad aufgebrachten anionischen und/oder nichtionischen Benetzungsmittels in einer Menge von 0,8 Gew.-% ausgerüstet, eingesetzt wird und mittels einem als Klebefilm eingesetzten, hiermit kompatiblen thermoplastischen Kunststoff mit einer Schaumstoffbahn wie vorangehend beschrieben verbunden wird. Bevorzugt wird ein sortenreiner Struktur-Wandbelag beispielsweise auf Basis Polypropylen oder Polyethylen hergestellt.

Während der vorangehend beschriebenen Herstellung des Struktur-Wandbelages, insbesondere während der Herstellung des Verbundes, der Prägung mit vorherigem Aufheizen und dem Herstellen der Kanäle verliert die cellulosehaltige Trägerbahn 6 einen erheblichen Teil ihrer üblicherweise enthaltenen Restfeuchte, die bei einer Papierbahn normalerweise etwa 5% beträgt. Durch diese Austrocknung der Trägerbahn auf Restfeuchtegehalte unterhalb der Normalwerte wird eine Rollund Wölbneigung des Struktur-Wandbelages gefördert. Zur Beseitigung dieser Roll- und Wölbneigung wird der Struktur-Wandbelag während seiner Fertigung wieder befeuchtet, was in der Fig. 1 durch Pfeile F angedeutet ist. Infolge der hohen Wasseraufnahmefähigkeit von mindestens 0,15 ml/g in 10 Minuten der Trägerbahn 6 nimmt diese während der kurzzeitigen Befeuchtung soviel Feuchtigkeit auf, daß sie eine Restfeuchte von 5 bis 15% nach der Befeuchtung aufweist und eine Roll- und Wölbneigung dadurch aufgehoben ist. Die überwiegend geschlossenzellige Schaumstoffbahn nimmt hingegen nur unwesentlich Feuchte auf. Nachfolgend wird der Struktur-Wandbelag abschnittsweise zu Rollen aufgewickelt und luftdicht, z.B. in Folie verpackt, so daß die Restfeuchte nicht mehr entweichen kann und der Struktur-Wandbelag ohne Rollneigung besonders einfach verarbeitbar ist.

Der so hergestellte Struktur-Wandbelag 25 wird vor dem Verarbeiten auf der Trägerbahnseite mit einem wasserhaltigen Klebstoff/Kleister bestrichen. Der Struktur-Wandbelag nimmt hierbei in der Zeit, während er verarbeitet wird, hauptsächlich (bis zu 99%) über die Trägerbahn 6 beispielsweise in 10 Minuten 0,21 ml/g Wasser auf.

Eine genaue Messung der Wasseraufnahme eines derartigen Struktur-Wandbelages, gemessen nach ASTM C 272, ergab bei 24 Stunden Wasserlagerung in destilliertem Wasser, danach Entnahme, Abtrocknen mit trockenem Vliestuch und Wägung eine Aufnahme von 0,24 ml/g Wasser.

Diese gute Wasseraufnahme erlaubt die Verarbeitung des Struktur-Wandbelages, der eine cellulosehaltige Trägerbahn enthält, wie bei einer sog schweren Tapete. Solche Struktur-Wandbeläge werden üblicherweise rückseitig, d.h. auf der Trägerbahnseite mit Kleister bestrichen und dann auf eine trockene Wand aufgebracht.

Wenn die Trägerbahn (6) abweichend vom eben beschriebenen Beispiel aus einem Synthesefaservlies gebildet ist, ist die vorangehend beschriebene Befeuchtung zwecks Anhebung des Restfeuchtegehalts der Trägerbahn nicht notwendig, da im Gegensatz zu einer cellulosehaltigen Trägerbahn durch geringe Restfeuchtemengen, die ggf. während der Verarbeitung noch kleiner werden, keine Roll- und Wölbneigung hervorgerufen wird. Vielmehr besitzt ein Synthesefaservlies eine so hohe Flexibilität und Elastizität, daß sich stets eine gute Planlage des so ausgebildeten Struktur-Wandbelags einstellt.

Die Prägestruktur des Struktur-Wandbelags auf seiner Oberseite 12 kann entsprechend gewünschten Dessinierungen unterschiedlich und in unterschiedlichem Umfange vorgesehen sein.

Das Bedrucken der Oberfläche des Struktur-Wandbelags kann vor der Herstellung des Verbundes oder danach erfolgen, erfolgt jedoch vorzugsweise gegen Ende der Herstellung. Infolge der möglichen Vorbehandlung, z.B. mittels eines Haftvermittlers auf Basis eines Polyurethan-Systems, ist eine große Druckvielfalt möglich.

Wahlweise können auch eingefärbte Schaumstoffbahnen eingesetzt werden, die durch Prägung und/oder Bedrucken bei gleichzeitiger Verdichtung der Schaumstoffoberfläche zu unterschiedlichen Farbtönungen infolge unterschiedlicher Reflexion des einfallenden Lichtes führen.

## Patentansprüche

1. Struktur-Wandbelag aus einem mittels Prägen mit einer Oberflächenstruktur versehenen Verbund eines bahnenförmigen Schaumstoffes von überwiegend geschlossenzelliger Schaumstruktur auf Basis von Polyolefinen, wie Polyethylen oder Polypropylen, eines Klebefilmes auf Basis eines thermoplastischen Kunststoffes und einer Trägerbahn auf Basis einer cellulosehaltigen Bahn, wie einer Papierbahn oder eines Cellulosefaservlieses, oder eines Synthesefaservlieses,
**dadurch gekennzeichnet, daß** die geprägte Schaumstoffbahn (15) des Verbundes eine unterschiedliche Dicke von 0,02 bis 3 mm aufweist und im Bereich der Oberfläche (12) der Schaumstoffbahn eine verdichtete Schwarte (16), unter der die Zellen (17) stark vergrößert sind, hieran anschließend nach der Mitte zu eine aufgelockerte gegenüber der nicht geprägten Schaumstoffbahn (2) vergröberte Zellstruktur (18) und in dem an den thermoplastischen Klebefilm (9) angrenzenden Bereich im wesentlichen die gleichmäßig feinzellige Zellstruktur (19) der noch nicht geprägten Schaumstoffbahn (2) aufweist, und der Struktur-Wandbelag Kanäle (26) aufweist, die durch die Trägerbahn (6), den Klebefilm (9) und die geprägte Schaumstoffbahn des Verbundes hindurchführen und durch das Prägen ein alternierender Querschnittswechsel der Schaumstoff bahn bei annähernder Planlage der Trägerbahn (6) vorhanden ist.

2. Struktur-Wandbelag nach Anspruch 1,
**dadurch gekennzeichnet, daß** der Verbund bis zu 50 Kanäle pro cm² aufweist.

3. Struktur-Wandbelag nach einem der Ansprüche 1 oder 2,
**dadurch gekennzeichnet, daß** der Klebefilm (9) auf Basis des gleichen thermoplastischen Kunststoffes, aus dem der Schaumstoff besteht oder aus einem thermoplastischen Schmelzkleber hergestellt ist.

4. Struktur-Wandbelag nach einem der Ansprüche 1 bis 3,
**dadurch gekennzeichnet, daß** beide Oberflächen (12, 12a) des Struktur-Wandbelags so strukturiert sind, daß in Bereichen tiefgeprägter Struktur mit Einbuchtungen (20) auf der Oberfläche (12) der Schaumstoffbahn leicht konkave, d.h. etwas eingezogene Bereiche (21) auf der anderen Oberfläche (12a) der Trägerbahn des Verbundes einander gegenüberliegend ausgebildet sind.

5. Struktur-Wandbelag nach einem der Ansprüche 1 bis 4,
**dadurch gekennzeichnet, daß** die durch den Verbund hindurchführenden Kanäle (26) einen Durchmesser von 0,01 bis 0,5 mm aufweisen.

6. Struktur-Wandbelag nach einem der Ansprüche 1 bis 5,
**dadurch gekennzeichnet, daß** die Schaumstoffbahn auf ihrer dem Klebefilm (9) abgewandten Seite eine fest aufgebrachte Deckfolie einer Dicke von 10 bis 100 um aus artgleichem Kunststoff wie die Schaumstoffbahn aufweist.

7. Struktur-Wandbelag nach einem der Ansprüche 1 bis 5,
**dadurch gekennzeichnet, daß** auf die Oberfläche (12) der Schaumstoffbahn des Verbundes eine Beschichtung auf Basis eines feuchtigkeitsvernetzenden Polyurethan-Systems mit einer Dicke kleiner als 50 µm aufgebracht ist.

8. Struktur-Wandbelag nach einem der Ansprüche 1 bis 7,
**dadurch gekennzeichnet, daß** die Schaumstoffbahn des Verbundes eingefärbt und/oder auf ihrer Oberfläche (12) bzw. der auf die Schaumstoffbahn aufgebrachten Deckfolie oder Polyurethan-Beschichtung bedruckt ist.

9. Struktur-Wandbelag nach einem der Ansprüche 1 bis 8,
**dadurch gekennzeichnet,** die Wasseraufnahme des den Struktur-Wandbelag bildenden Verbundes mit einer cellulosehaltigen Trägerbahn (6) mindestens 0,15 ml/g in 10 Minuten beträgt.

10. Struktur-Wandbelag nach einem der Ansprüche 1 bis 9,
**dadurch gekennzeichnet, daß** die Trägerbahn (6) aus einer Papierbahn gebildet ist, die mindestens 30 Volumen-% offene Poren in bezug auf das Gesamtvolumen der Papierbahn und ein Flächengewicht von 20 bis 150 g/m² aufweist.

11. Struktur-Wandbelag nach einem der Ansprüche 1 bis 10,
**dadurch gekennzeichnet, daß** die aus einer cellulosehaltigen Bahn gebildete Trägerbahn (6) an der Wasseraufnahme einen Anteil von 99,5 bis 95 % und die geprägte Schaumstoffbahn des Verbundes einen Anteil von 0,5 bis 5 % aufweist

12. Struktur-Wandbelag nach einem der Ansprüche 1 bis 11,
**dadurch gekennzeichnet, daß** die Trägerbahn eine Restfeuchte von 5 bis 15 % aufweist.

13. Struktur-Wandbelag nach einem der Ansprüche I bis 8,
**dadurch gekennzeichnet, daß** Trägerbahnen aus einem Synthesefaservlies auf Basis von thermoplastischen Polyestern oder Polyolefinen, wie Polypropylen eingesetzt sind.

14. Struktur-Wandbelag nach Anspruch 13,
**dadurch gekennzeichnet, daß** Synthesefaservliese mit einem Flächengewicht von 50 bis 200 g/m² eingesetzt sind.

15. Struktur-Wandbelag nach einem der Ansprüche 13 oder 14,
**dadurch gekennzeichnet, daß** hydrophil ausgerüstete Synthesefaservliese eingesetzt sind.

16. Verfahren zum Herstellen eines Struktur-Wandbelags aus einem mittels Prägen mit einer Oberflächenstruktur versehenen Verbund eines bahnenförmigen Schaumstoffes von geschlossenzelliger Schaumstruktur auf Basis von Polyolefinen, wie Polyethylen oder Polypropylen, eines Klebfilmes auf Basis eines thermoplastischen Kunststoffes und einer Trägerbahn auf Basis einer cellulosehaltigen Bahn, wie einer Papierbahn oder eines Cellulosefaservlieses oder eines Synthesefaservlieses nach einem der Ansprüche 1 bis 15, bei dem auf die Trägerbahn als Klebefilm ein frisch extrudierter noch plastifizierter thermoplastischer Kunststoff aufgebracht und hiermit die vorgefertigte Schaumstoffbahn von geschlossenzelliger Schaumstruktur beim Durchführen durch einen Walzenspalt unter Druck verbunden wird und nachfolgend beim Durchlaufen eines Prägespaltes die Oberfläche der Schaumstoffbahn des Verbundes geprägt wird, **dadurch gekennzeichnet, daß** unmittelbar vor dem Verbinden mit der Trägerbahn (6) die Schaumstoff bahn (2) bei annähernd Raumtemperatur um maximal 1 % gelängt wird und der extrudierte thermoplastische Klebefilm (9) zunächst auf die Trägerbahn (6) aufgebracht und unmittelbar danach dieser Vorverbund von Trägerbahn (6) und Klebefilm (9) dem Walzenspalt (11) zugeführt und hier mit der gelängten Schaumstoffbahn (2) verbunden wird und bei dem nachfolgenden Prägen die Oberfläche des Verbundes strukturiert wird, wobei die Dicke der Schaumstoffbahn um 5 bis 95 % vermindert wird und der Verbund vor oder nach dem Durchlaufen des Prägespaltes maschinell mit durch den Verbund hindurchführenden Kanälen versehen wird.

17. Verfahren nach Anspruch 16,
**dadurch gekennzeichnet, daß** die durch den Verbund führenden Kanäle durch Durchführen des Verbundes durch einen Spalt zwischen einer Nadelwalze und einer Gegenwalze hergestellt werden.

18. Verfahren nach einem der Ansprüche 16 oder 17
**dadurch gekennzeichnet, daß** auf die Schaumstoffbahn (2) vor dem Einlaufen in den Walzenspalt auf ihrer dem Klebefilm (9) abgewandten Oberfläche eine Deckfolie aus artgleichem Kunststoff aufgebracht wird, die eine Dicke von 10 bis 100 µm aufweist.

19. Verfahren nach Anspruch 18,
**dadurch gekennzeichnet, daß** die Deckfolie im Coextrusionsverfahren auf die Schaumstoffbahn (2) aufgebracht wird.

20. Verfahren nach einem der Ansprüche 16 oder 17,
**dadurch gekennzeichnet, daß** auf die dem Klebefilm (9) abgewandte Oberfläche der Schaumstoffbahn (2) vor oder nach dem Herstellen des Verbundes mit der Trägerbahn (6) ein feuchtigkeitsvernetzendes Polyurethan-System als Haftvermittler mittels eines Dünnstrichs aufgebracht wird und die mit dem Haftvermittler versehene Oberfläche mittels einer wäßrigen Druckfarbendispersion bedruckt wird.

21. Verfahren nach einem der Ansprüche 16 bis 20,
**dadurch gekennzeichnet,** das der Struktur-Wandbelag nach seiner Fertigstellung abschnittsweise auf Rollen aufgewickelt und luftdicht verpackt wird.

22. Verfahren nach Anspruch 16,
**dadurch gekennzeichnet, daß** der geprägte, genadelte und gegebenenfalls bedruckte, eine cellulosehaltige Trägerbahn enthaltende Verbund befeuchtet wird, so daß die durch die vorangegangenen Verfahrensschritte verlorengegangene Feuchte der Trägerbahn mindestens wieder ausgeglichen wird und die Restfeuchte der cellulosehaltigen Trägerbahn durch das Befeuchten auf 5 bis 15 % angehoben wird.

## Claims

1. A structural wall covering consisting of a composite embossed with a surface structure and comprised of a foam in web form having a primarily closed-cell foam structure based on polyolefins, such as polyethylene or polypropylene, an adhesive film based on a thermoplastic and a supporting web based on a cellulose-containing web, e.g., a paper web or a cellulose fiber mat, or a synthetic fiber mat, **characterized in that** the embossed foam web (15) of the composite has a varying thickness of 0.02 to 3 mm, and, in the area of the surface (12) of the foam web, has a compacted slab (16), under which the cells (17) are greatly enlarged, adjacent to this toward the middle a coarser cell structure (18) looser relative to the unembossed foam web (2) and, in the area bordering the thermoplastic adhesive film (9), essentially the uniform, fine-celled cell structure (19) of the as yet unembossed foam web (2), and that the structural wall covering has channels (26) that lead through the supporting web (6), the adhesive film (9) and the embossed foam web of the composite, and that embossing provides an alternating change in cross section for the foam web with the supporting web (6) in approximately a flat position.

2. The structural wall covering according to claim 1, **characterized in that** the composite has up to 50 channels per cm².

3. The structural wall covering according to one of claims 1 or 2, **characterized in that** the adhesive film (9) is fabricated based on the same thermoplastic comprising the foam, or out of a thermoplastic hot melt adhesive.

4. The structural wall covering according to one of claims 1 to 3, **characterized in that** both surfaces (12, 12a) of the structural wall covering are structured in such a way that, in areas having a deeply embossed structure with indentations (20) on the surface (12) of the foam web, slightly concave, i.e., somewhat drawn-in areas (21) are formed on the other surface (12a) of the supporting web of the composite in a mutually opposing manner.

5. The structural wall covering according to one of claims 1 to 4, **characterized in that** the channels (26) leading through the composite have a diameter of 0.01 to 0.5 mm.

6. The structural wall covering according to one of claims 1 to 5, **characterized in that** the side of the foam web facing away from the adhesive film (9) has a securely affixed cover film with a thickness of 10 to 100 µm made out of the same type of plastic as the foam web.

7. The structural wall covering according to one of claims 1 to 5, **characterized in that** a coating based on a moisture-cross-linking polyurethane system with a thickness les than 50 µm is applied to the surface (12) of the foam web of the composite.

8. The structural wall covering according to one of claims 1 to 7, **characterized in that** the foam web of he composite is dyed and/or imprinted on its surface (12) or the cover film or polyurethane coating applied to the foam web.

9. The structural wall covering according to one of claims 1 to 8, **characterized in that** the water absorbed by the composite forming the structural wall covering with a cellulose-containing supporting web (6) measures at least 0.15 ml/g in 10 minutes.

10. The structural wall covering according to one of claims 1 to 9, **characterized in that** the supporting web (6) consists of a paper web having at least 30 %v/v open pores relative to the entire volume of the paper web, and a weight per unit area of 20 to 150 g/m².

11. The structural wall covering according to one of claims 1 to 10, **characterized in that** the supporting web (6) consisting of a cellulose-containing web takes up 99.5 to 95 % of the water absorption, while the embossed foam web of the composite takes up 0.5 to 5 %.

12. The structural wall covering according to one of claims 1 to 11, **characterized in that** the supporting web has a residual moisture of 5 to 15 %.

13. The structural wall covering according to one of claims 1 or 8, **characterized in that** use is made of supporting webs made out of a synthetic fiber mat based on thermoplastic polyesters or polyolefins, e.g., polypropylene.

14. The structural wall covering according to claim 13, **characterized in that** synthetic fiber mats with a weight per unit area of 50 to 200 g/m² are used.

15. The structural wall covering according to one of claims 13 or 14, **characterized in that** hydrophilically finished synthetic fiber mats are used.

16. A procedure for manufacturing a structural wall covering consisting of a composite embossed with a surface structure and comprised of a foam in web form having a closed-cell foam structure based on polyolefins, such as polyethylene or polypropylene, an adhesive film based on a thermoplastic and a supporting web based on a cellulose-containing web, e.g., a paper web or a cellulose fiber mat, or a synthetic fiber mat according to one of claims 1 to 15, in which a freshly extruded, still plasticized thermoplastic is applied to the supporting web, thereby bonding the prefabricated foam web with a closed-cell foam structure under a pressure when passed through a nip, after which the surface of the foam web of the composite is embossed when passing through an embossing nip, **characterized in that**, immediately prior to bonding with the supporting web (6), the foam web (2) is lengthened by a maximum of 1 % at approximately room temperature, and the extruded thermoplastic adhesive film (9) is first applied to the supporting web (6), and immediately thereafter this precomposite of a supporting web (6) and adhesive film (9) is supplied to the nip (11), and here bonded with the lengthened foam web (2), and wherein the surface of the composite is structured during subsequent embossing, wherein the thickness of the foam web is diminished by 5 to 95 %, and the composite is mechanically provided with channels passing traversing the composite before or after passing through the embossing nip.

17. The procedure according to claim 16, **characterized in that** the channels traversing the composite are fabricated by passing the composite through a nip between a pin roller and a counter-roller.

18. The procedure according to one of claims 16 or 17, **characterized in that**, just prior to entering the nip, a cover film made of a similar type of plastic and having a thickness of 10 to 100 µm is applied to the surface of the foam web (2) facing away from the adhesive film (9).

19. The procedure according to claim 18, **characterized in that** the cover film is applied to the foam web (2) in a coextrusion process.

20. The procedure according to one of claims 16 or 17, **characterized in that** a thin coating of a moisture cross-linking polyurethane is applied to the surface of the foam web (2) facing away from the adhesive film (9) as a coupling agent before or after the composite with the supporting web (6) is fabricated, and the surface provided with the coupling agent is imprinted using an aqueous printing ink dispersion.

21. The procedure according to one of claims 16 to 20, **characterized in that** the structural wall covering is wound up on rollers and packaged airtight after finished.

22. The procedure according to claim 16, **characterized in that** the embossed, needled and, if necessary, imprinted composite incorporating a cellulose-containing supporting web is moistened, so that the moisture of the supporting web lost in the preceding procedural steps is at least balanced out again, and the residual moisture of the cellulose-containing supporting web is increased to 5 to 15 % via the moistening.

## Revendications

1. Revêtement de mur structuré composé d'un composite, muni par matriçage d'une structure superficielle, d'un produit alvéolaire en forme de bande ayant une structure alvéolaire en majeure partie à cellules fermées sur la base de polyoléfines, telles que le polyéthylène ou le polypropylène, d'un film adhésif sur la base d'une matière plastique thermoplastique et d'une bande support sur la base d'une bande contenant de la cellulose, comme une bande de papier ou un non-tissé cellulosique, ou d'un non-tissé synthétique, **caractérisé en ce que** la bande de produit alvéolaire matricée (15) du composite présente une épaisseur variable de 0,02 à 3 mm et au niveau de la surface (12) de la bande de produit alvéolaire une croûte comprimée (16), sous laquelle les cellules (17) sont fortement agrandies, après cela en direction du centre, une structure cellulaire (18) aérée, plus grossière par rapport à la bande de produit alvéolaire matricée (2), et dans la zone adjacente au film adhésif thermoplastique (9) substantiellement la structure cellulaire (19) à cellules uniformément fines (2) de la bande de produit alvéolaire (2) non encore matricée, et **en ce que** le revêtement de mur structuré présente des canaux (26) qui traversent la bande support (6), le film adhésif (9) et la bande de produit alvéolaire matricée du composite, et **en ce que** grâce au matriçage, il existe un changement de section en alternance de la bande de produit alvéolaire dans une position approximativement plane de la bande support (6).

2. Revêtement de mur structuré selon la revendication 1, **caractérisé en ce que** le composite présente jusqu'à 50 canaux par cm².

3. Revêtement de mur structuré selon l'une quelconque des revendications 1 ou 2, **caractérisé en ce que** le film adhésif (9) est fabriqué sur la base de la même matière plastique thermoplastique dont se compose le produit alvéolaire ou qu'il est fabriqué à partir d'une colle à fusion thermoplastique.

4. Revêtement de mur structuré selon l'une quelconque des revendications 1 à 3, **caractérisé en ce que** les deux surfaces (12, 12a) du revêtement de mur structuré sont structurées de telle sorte que dans des zones de structure matricées en profondeur avec des enfoncements (20) à la surface (12) de la bande de produit alvéolaire, des zones légèrement concaves, c'est-à-dire un peu en retrait (21), sont réalisées de façon mutuellement opposée sur l'autre surface (12a) de la bande support du composite.

5. Revêtement de mur structuré selon l'une quelconque des revendications 1 à 4, **caractérisé en ce que** les canaux (26) traversant le composite présentent un diamètre de 0,01 à 0,5 mm.

6. Revêtement de mur structuré selon l'une quelconque des revendications 1 à 5, **caractérisé en ce que** la bande de produit alvéolaire présente sur sa face détournée du film adhésif (9) une feuille de recouvrement appliquée de façon permanente d'une épaisseur de 10 à 100 µm en matière plastique de même type que la bande de produit alvéolaire.

7. Revêtement de mur structuré selon l'une quelconque des revendications 1 à 5, **caractérisé en ce que** sur la surface (12) de la bande de produit alvéolaire du composite est appliqué un revêtement sur la base d'un système polyuréthane réticulant à l'humidité d'une épaisseur inférieure à 50 µm.

8. Revêtement de mur structuré selon l'une quelconque des revendications 1 à 7, **caractérisé en ce que** la bande de produit alvéolaire du composite est encrée et/ou imprimée sur sa surface (12) ou sur celle de la feuille de recouvrement appliquée sur la bande de produit alvéolaire ou du revêtement polyuréthane.

9. Revêtement de mur structuré selon l'une quelconque des revendications 1 à 8, **caractérisé en ce que** l'absorption d'eau du composite constituant le revêtement de mur structuré avec une bande support (6) contenant de la cellulose s'élève à au moins 0,15 ml/g en 10 minutes.

10. Revêtement de mur structuré selon l'une quelconque des revendications 1 à 9, **caractérisé en ce que** la bande support (6) est formée par une bande de papier qui présente au moins 30 % en volume de pores ouvertes par rapport au volume total de la bande de papier et un grammage de 20 à 150 g/m².

11. Revêtement de mur structuré selon l'une quelconque des revendications 1 à 10, **caractérisé en ce que** la bande support (6) formée par une bande contenant de la cellulose présente un pourcentage d'absorption d'eau de 99,5 à 95 % et la bande de produit alvéolaire du composite présente un pourcentage de 0,5 à 5 %.

12. Revêtement de mur structuré selon l'une quelconque des revendications 1 à 11, **caractérisé en ce que** la bande support présente une humidité résiduelle de 5 à 15 %.

13. Revêtement de mur structuré selon l'une quelconque des revendications 1 à 8, **caractérisé en ce que** des bandes support composées de non-tissé synthétique sur la base de polyesters ou de polyoléfines thermoplastiques, tels que le polypropylène, sont mises en oeuvre.

14. Revêtement de mur structuré selon la revendication 13, **caractérisé en ce que** des non-tissés synthétiques d'un grammage de 50 à 200 g/m² sont mis en oeuvre.

15. Revêtement de mur structuré selon l'une quelconque des revendications 13 ou 14, **caractérisé en ce que** des non-tissés synthétiques à capacité hydrophile sont mis en oeuvre.

16. Procédé de fabrication d'un revêtement de mur structuré composé d'un composite, muni par matriçage d'une structure superficielle, d'un produit alvéolaire en forme de bande ayant une structure alvéolaire à cellules fermées sur la base de polyoléfines, telles que le polyéthylène ou le polypropylène, d'un film adhésif sur la base d'une matière plastique thermoplastique et d'une bande support sur la base d'une bande contenant de la cellulose, comme une bande de papier ou un non-tissé cellulosique, ou d'un non-tissé synthétique, selon l'une quelconque des revendications 1 à 15, dans lequel une matière plastique thermoplastique, récemment extrudée et encore plastifiée, est appliquée sur la bande support comme film adhésif et permet ainsi de combiner sous pression la bande de produit alvéolaire préfabriquée ayant une structure alvéolaire à cellules fermées lors du passage à travers une emprise, et par la suite, lors du passage par une zone de matriçage, de matricer la surface de la bande de produit alvéolaire du composite, **caractérisé en ce qu'**immédiatement avant la combinaison avec la bande support (6), la bande de produit alvéolaire (2) est rallongée environ à température ambiante d'un maximum de 1 % et le film adhésif thermoplastique extrudé (9) est d'abord appliqué sur la bande support (6) et immédiatement après, ce composite préliminaire composé de la bande support (6) et du film adhésif (9) est amené à l'emprise (11) et y est combiné avec la bande de produit alvéolaire (2) rallongée, et la surface du composite est structurée au cours du matriçage consécutif, l'épaisseur de la bande de produit alvéolaire étant réduite de 5 à 95 % et le composite étant muni mécaniquement, avant ou après le passage par la zone de matriçage, de canaux traversant le composite.

17. Procédé selon la revendication 16, **caractérisé en ce que** les canaux traversant le composite sont fabriqués **en ce que** l'on fait passer le composite à travers un espace entre un hérisson et un rouleau conjugué.

18. Procédé selon l'une quelconque des revendications 16 ou 17, **caractérisé en ce que** sur la bande de produit alvéolaire (2), avant l'entrée dans l'emprise, sur sa surface détournée du film adhésif (9), une feuille de recouvrement en matière plastique de même type est appliquée qui présente une épaisseur de 10 à 100 µm.

19. Procédé selon la revendication 18, **caractérisé en ce que** la feuille de recouvrement est appliquée selon un procédé de coextrusion sur la bande de produit alvéolaire (2).

20. Procédé selon l'une quelconque des revendications 16 ou 17, **caractérisé en ce que** sur la surface détournée du film adhésif (9) de la bande de produit alvéolaire (2), avant ou après la fabrication du composite avec la bande support (6), un système polyuréthane réticulant à l'humidité est appliqué comme agent adhésif au moyen d'un couchage mince, et **en ce que** la surface munie de l'agent adhésif est imprimée au moyen d'une dispersion aqueuse d'encres d'imprimerie.

21. Procédé selon l'une quelconque des revendications 16 à 20, **caractérisé en ce qu'**une fois terminé, le revêtement de mur structuré est enroulé par segments sur des rouleaux et conditionné de façon hermétique.

22. Procédé selon la revendication 16, **caractérisé en ce que** le composite matricé, aiguilleté et éventuellement imprimé, comprenant une bande support contenant de la cellulose, est humidifié de sorte l'humidité de la bande support perdue au cours des étapes précédentes est au moins compensée et l'humidité résiduelle de la bande support contenant de la cellulose est augmentée par l'humidification jusqu'à 5 à 15 %.
